# EUROPEAN PATENT APPLICATION

(11) **EP 2 541 504 A2**
(43) Date of publication of application: **02.01.2013**
(21) Application number: 12169679.3
(22) Date of filing: 28.05.2012
(51) Int. Cl.: G07C 1/10, G07C 5/00

(54) **Method for verification of inspection of a vehicle**

(30) Priority: 30.06.2011 SE 1150605
(71) Applicant: Scania CV AB, 151 87 Södertälje (SE)
(72) Inventor: Johansson, Anders, 146 31 Tullinge (SE); Eriksson, Markus, 117 62 Stockholm (SE); Callenryd, Fredrik, 743 35 Storvreta (SE)

(57) **Abstract**

The invention relates to a method for verification of inspection of a stationary vehicle (1) by means of a handheld unit (2) comprising at least one sensor. The method comprises the steps of indicating (A) to the handheld unit that the inspection is to begin, recording (B) a movement pattern of the handheld unit, transmitting (C) to a supervision unit (3) the handheld unit's movement pattern relative to the vehicle, receiving (D) the movement pattern at the supervision unit and evaluating (E) the movement pattern to verify that inspection has been carried out by verifying that to a predetermined extent the movement pattern conforms to a predetermined movement pattern. The invention relates also to a computer programme product comprising computer programme instructions for conducting the method for verification of inspection of a stationary vehicle by means of a handheld unit.

## Description

### Field of the invention

The present invention relates to a method and a product for a vehicle according to the preambles of the independent claims.

### Background to the invention

It is important that safety checks are carried out on vehicles, e.g. trucks, buses and cars, which are in regular use or even in less regular use. For the running of a vehicle it is desirable to check that all of its components are in a fit state for use. It is therefore desirable that the driver or whoever is responsible for the vehicle (e.g. a haulier) should regularly check the vehicle's components such as tyres, lamps, flashers, rearview mirrors etc.

Regular inspections of vehicles, e.g. heavy vehicles such as trucks, are important to reduce the risk of unscheduled workshop visits or of vehicles being off road (VOR). Such inspections also lead to reduced costs if a problem can be identified and rectified early.

A known current practice is to use a handheld unit to read the status of various components of the vehicle on the occasion of servicing or when the vehicle has been involved in an accident. Such a handheld unit intended to be used during servicing or when an accident has occurred will read parameters other than those for which checking is required as part of regular inspection. Another known practice is remote reading of certain data of a vehicle which is on its way to a workshop, in order to know beforehand what kind of action is needed.

Examples of a number of specifications referring to known methods and devices in this field are set out below.

US 20080316007 and US 2005256681 describe a method for verifying that a vehicle undergoes obligatory inspections. The method uses data from a handheld unit which registers that the person carrying out an inspection was within a predetermined distance from the vehicle.

US 2003033061 refers to a method for inspecting a vehicle by means of a handheld unit in order to cater for the vehicle's maintenance.

JP 2009192219 refers to a system for facilitating a vehicle's daily inspection on the basis of having units on the vehicle which send status reports to a central unit and as a result present the driver with the vehicle's current condition day by day.

US 2006232406 describes a method for following up a period of operation by means of a portable RFID (radio frequency identification device).

As mentioned above, there is a need to ensure that a vehicle really does undergo regular inspections. None of the known techniques in the specifications cited is specifically suited to being used in such regular vehicle inspections intended to be performed by the driver or whoever is responsible for the vehicle.

As it is currently difficult for a person in charge of a vehicle, or for its manufacturer, to check that it regularly undergoes inspection, the object of the present invention is to propose an improved and simplified method for verifying that regular inspections are carried out.

### Summary of the invention

The above objects are achieved by the invention defined by the independent claims.

Preferred embodiments are defined by the dependent claims.

A first aspect of the invention relates to a method for verification of inspection of a stationary vehicle by means of a handheld unit comprising at least one sensor. The method comprises the steps of indicating to the handheld unit that inspection is to commence, recording a pattern of movement of the handheld unit, transmitting to a supervision unit the handheld unit's pattern of movement relative to the vehicle, receiving the movement pattern at the supervision unit and evaluating the movement pattern in order to verify that inspection has been carried out by verifying that the movement pattern to a predetermined degree conforms to a predetermined movement pattern.

It is thus desired to verify that inspections are regularly carried out so that problems can be dealt with early. Inspections not carried out may lead to problems being only detected in the workshop or becoming so extensive that the vehicle becomes immobilised on the road. This leads to greater costs both to the person responsible for the vehicle and to its manufacturer. The information verified can be used as a basis for drawing conclusions about maintenance or repair needs, and a further object is to be able to adapt the configuration of guarantee contracts, leasing agreements and the like.

It would also be possible to ensure that inspections actually are carried out, e.g. by means of reminders, economic incentives or in contract negotiations.

Another aspect of the invention is a computer programme product comprising computer programme instructions for applying the method for verification of inspection of a stationary vehicle by means of a handheld unit.

### Brief description of drawings

- Figure 1: depicts a system for verification of inspection of a vehicle,
- Figure 2: depicts a system for verification of inspection of a vehicle according to a preferred embodiment, and
- Figure 3: depicts a predetermined movement pattern according to a preferred embodiment.

### Detailed description of preferred embodiments of the invention

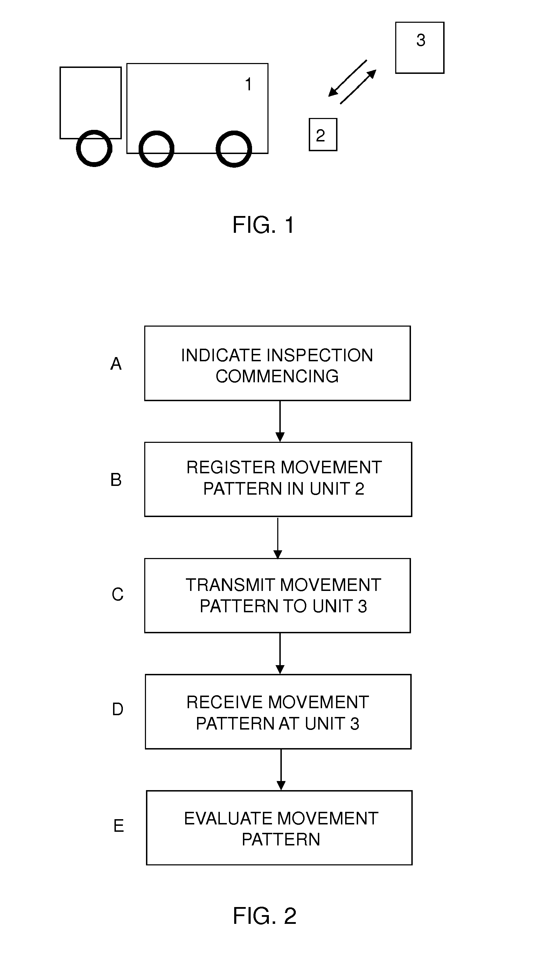

Figure 1 depicts a system for verification of inspection of a vehicle. The vehicle 1 may for example be, as depicted in the diagram, a truck but it may also be some other heavy vehicle, e.g. a bus, or some other type of vehicle, e.g. a car. A handheld unit 2 is used for performing the inspection, preferably daily for vehicles in commercial use. The daily inspection is performed by the vehicle's driver or whoever is responsible for the vehicle, e.g. a haulier, walking round the vehicle and making sure that all of the components which need checking are checked, e.g. tyres, side mirrors, rearview mirror, windscreen, registration plates and any connecting devices on the truck. Carrying out the inspection thus results in a movement pattern which is recorded by a sensor in the handheld unit 2. This sensor may be a GPS, an accelerometer or a gyroscope. The movement pattern is communicated to a supervision unit 3, e.g. a communication centre, situated outside the vehicle. The supervision unit may for example be situated at the premises of the manufacturer or reseller of the particular vehicle model.

The handheld unit's movement pattern may comprise the distance travelled by the handheld unit, the points where it is stationary and how long it is stationary at each point. The movement pattern recorded by the handheld unit thus shows where the person who carried out the inspection moved, stood still and how much time he/she spent at each point.

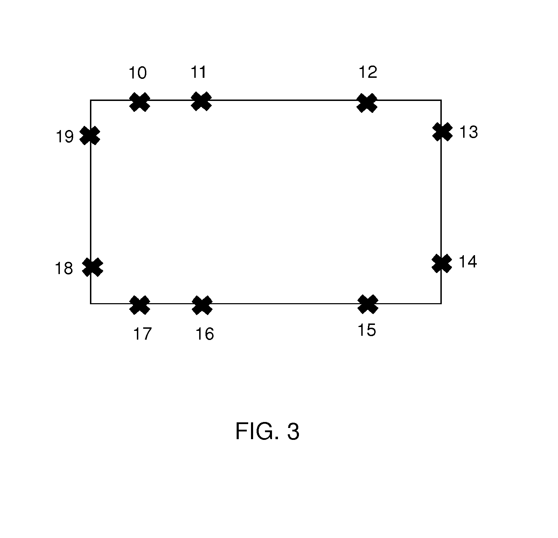

Figure 3 depicts an embodiment of a predetermined movement pattern to which that of the handheld unit is intended to conform. The predetermined movement pattern takes substantially the form of a rectangle which is the geometrical shape substantially corresponding to the pattern of movement as seen from above of a person walking round a vehicle such as that depicted in Figure 1. The predetermined movement pattern further comprises a number of checkpoints 10-19 which indicate where the handheld unit should be stationary and for how much time. As depicted in the diagram, refs. 10, 11, 12, 15, 16 and 17 denote points where the person carrying out the inspection should stop to check the vehicle's tyres, and refs. 13, 14, 18 and 19 are those where the person carrying out the inspection should stop to check headlamps and flashers. It is also possible to indicate the predetermined movement pattern on the basis of other geometrical shapes, e.g. an ellipse, a square or a quadrilateral with corners linked by curving or arcuate lines, and on the basis of other checkpoints, e.g. for checking of components within the vehicle, or for checking of further external components.

The handheld unit 2 may with advantage comprise a checklist of the portions of the vehicle which need inspecting, i.e. the components which should be checked. This list may be used by the handheld unit's user as support for the inspection, and the movement pattern may be compared with it.

The supervision unit 3 may receive from the vehicle's driving computer information which comprises the vehicle's location. The information may also comprise where the vehicle was at a predetermined time before it came to a halt, thus making it possible to determine the stationary vehicle's orientation, i.e. which direction it is facing. The handheld unit's movement pattern may thus be taken into account relative to the vehicle's location, i.e. to where the vehicle is at the time. Alternatively, or in addition, the handheld unit's movement pattern may also be taken into account relative to the vehicle's orientation. The vehicle's positioning may be by means of a GPS (global positioning system) unit, a WLAN (wireless local area network) unit or some other conventional positioning system.

The supervision unit 3 may receive information from the handheld unit continuously during the inspection. Alternatively, an indication may appear on the handheld unit that the inspection has ended, before the movement pattern is transmitted to the supervision unit.

The handheld unit is for example a mobile telephone, e.g. a so-called smartphone.

Alternatively, the inspection may be conducted with the handheld unit by the method comprising reading a specific number of markers on the vehicle. The markers might for example be RFID markers. The handheld unit is therefore suited to reading such markers.

Figure 2 illustrates a method for verification of inspection of a vehicle according to a preferred embodiment. The method is intended for verification of inspection of a stationary vehicle 1 by means of a handheld unit 2 comprising at least one sensor. The method comprises the steps of indicating (A) to the handheld unit that the inspection is to begin, recording (B) a movement pattern of the handheld unit, transmitting (C) to a supervision unit 3 the handheld unit's movement pattern relative to the vehicle, receiving (D) the movement pattern at the supervision unit and evaluating (E) the movement pattern to verify that inspection has been carried out by verifying that to a predetermined extent the movement pattern conforms to a predetermined movement pattern.

The movement pattern recorded in the handheld unit 2 and transmitted to the supervision unit 3 serves as a basis for assessing whether it is likely that the inspection has been carried out, by comparison with the predetermined movement pattern. The predetermined movement pattern may be any form of reference pattern built up over time. An alternative is an average movement pattern for various different users of the same type of vehicle. Another alternative might be the predetermined movement pattern being entered in a register of various movement patterns from various different users of the same type of vehicle who have carried out inspections of the same type of vehicle, in which case it would be sufficient at the time of verification that the movement pattern recorded by the handheld unit conforms to one of these stored movement patterns which are all predetermined approved movement patterns. With advantage, some deviation may be allowed as regards points where the handheld unit has been and for how much time. This may be indicated in the form of predetermined threshold values. This makes it possible to use the results of the evaluation (E) of the movement pattern as a basis for drawing a conclusion about whether inspection has been carried out when the handheld unit's movement pattern is within threshold values for the predetermined movement pattern. If the result of the evaluation is that the handheld unit's movement pattern is not within threshold values for the predetermined movement pattern, the conclusion drawn is that the inspection was not carried out.

The present invention is not restricted to the preferred embodiments described above. Sundry alternatives, modifications and equivalents may be used. The aforesaid embodiments are therefore not to be regarded as limiting the invention's protective scope, which is defined by the attached claims.

## Claims

1. A method for verification of inspection of a stationary vehicle (1) by means of a handheld unit (2) comprising at least one sensor, which method comprises the steps of
- indicating (A) to the handheld unit that the inspection is to begin,
- recording (B) a movement pattern of the handheld unit,
- transmitting (C) to a supervision unit (3) the handheld unit's movement pattern relative to the vehicle,
- receiving (D) the movement pattern at the supervision unit and
- evaluating (E) the movement pattern to verify that inspection has been carried out by verifying that to a predetermined extent the movement pattern conforms to a predetermined movement pattern.

2. A method according to claim 1, in which the handheld unit's movement pattern comprises the distance travelled by the handheld unit, the points where it is stationary and how long it is stationary at each point.

3. A method according to claim 1 or 2, in which the predetermined movement pattern takes substantially the form of a rectangle and a number of checkpoints.

4. A method according to claim 3, in which the results of the evaluation (E) of the movement pattern serve as a basis for drawing a conclusion about whether inspection has been carried out when the handheld unit's movement pattern is within threshold values for the predetermined movement pattern.

5. A method according to any one of the foregoing claims, in which the handheld unit comprises a checklist of the portions of the vehicle which need inspecting, which list the handheld unit's user uses as support during the inspection and with which the movement pattern is compared.

6. A method according to any one of the foregoing claims, comprising the supervision unit receiving from the vehicle's driving computer information which comprises the vehicle's location.

7. A method according to claim 6, comprising the supervision unit receiving from the vehicle's driving computer information which comprises where the vehicle was at a predetermined time before it came to a halt, thus making it possible to determine the stationary vehicle's orientation.

8. A method according to any one of the foregoing claims, in which the handheld unit's movement pattern is taken into account relative to the vehicle's location and/or orientation.

9. A method according to any one of the foregoing claims, comprising indicating to the handheld unit that the inspection has been completed, before the movement pattern is transmitted to the supervision unit.

10. A method according to any one of the foregoing claims, in which the handheld unit's sensor is a GPS.

11. A method according to any one of the foregoing claims, in which the handheld unit is a mobile telephone.

12. A method according to any one of the foregoing claims, whereby the inspection by means of the handheld unit is conducted by the method comprising reading a specified number of markers on the vehicle.

13. A computer programme product comprising computer programme instructions for conducting the method according to any one of claims 1 to 12.
